# EUROPÄISCHE PATENTSCHRIFT

(11) **EP 3 413 458 B1**
(45) Veröffentlichungstag und Bekanntmachung des Hinweises auf die Patenterteilung: **08.12.2021**
(21) Anmeldenummer: 18171599.6
(22) Anmeldetag: 09.05.2018
(51) Int. Cl.: H02P 27/16, H02P 6/22, H02P 6/26, H02P 27/06

(54) **ANSTEUERUNG FÜR 1-PHASEN-SYNCHRONMOTOR**
CONTROL FOR 1-PHASE SYNCHRONOUS MOTOR
COMMANDE POUR MOTEUR SYNCHRONE MONOPHASÉ

(30) Priorität: 07.06.2017 DE 102017112485
(43) Veröffentlichungstag der Anmeldung: 12.12.2018
(73) Patentinhaber: Miele & Cie. KG, 33332 Gütersloh (DE)
(72) Erfinder: Lochner, Thomas, 53902 Bad Münstereifel (DE); Rech, Thomas, 53881 Euskirchen (DE); Schaefer-van den Boom, Klaus, 53489 Sinzig (DE); Sammoud, Hafedh, 8090 Kelibia (TN)

(56) Entgegenhaltungen:
- DE-A1- 10 316 878
- DE-T2- 69 922 140
- US-A1- 2012 032 629

## Beschreibung

Die vorliegende Erfindung betrifft ein mechatronisches System mit einem einsträngigen 1-Phasen-Synchronmotor.

Einfache Synchronmotoren, wie 1-Phasen-Synchronmotoren, sind in der Herstellung preisgünstig und im Betrieb zuverlässig. Aufgrund des Arbeitsprinzips können Synchronmotoren bei Betrieb an einer Netzwechselspannung zwar relativ einfach angesteuert werden, jedoch auch nur mit der von der Frequenz der Netzwechselspannung abhängigen festen Drehzahl laufen. Weiterhin ist die Drehrichtung eines solchen Motors ohne zusätzliche Maßnahmen in der Regel zufällig, da er immer in einer der zwei möglichen Drehrichtungen anläuft.

Eine gewünschte spezifische Drehrichtung kann nicht sichergestellt werden. Ohne zusätzliche Sensoren ist es ferner nicht möglich, eine Rotation/eine Blockade, die Rotationsrichtung, den Lastzustand und andere Statusinformationen zu erfassen. Gerade bei den günstigen 1-Phasen-Synchronmotoren verursachen zusätzliche Sensoren jedoch sehr hohe anteilige Zusatzkosten und sind somit besonders nachteilig. Unabhängig von dem Kostenaspekt erhöhen Sensoren auch prinzipiell die Fehleranfälligkeit des betreffenden Motors, und, je nach Betriebsumgebung, bestehen eine erhöhte Verschmutzungsgefahr und ein erhöhter Verschleiß.

Ferner gibt es weltweit verschiedene Stromnetze mit unterschiedlicher Netzfrequenz und Netzspannung, beispielsweise 230 V bei 50 Hz in Europa, 120 V bei 60 Hz in Nordamerika oder 100 V bei 50-60 Hz in Japan. Um für eine Gerätefamilie weltweit ähnliche Betriebswerte zu erzielen werden somit landestypische Auslegungen - etwa der Wicklung - zur Realisierung, z.B. der geforderten Abgangswellen-Drehzahl, erforderlich. Dies konterkariert eine Plattform-Strategie mit einer möglichst hohen Anzahl an Gleichteilen und ist daher besonders nachteilig, wenn Geräte für verschiedene Märkte bereitgestellt werden sollen.

Ein zumindest in der Drehrichtung umschaltbarer und zugleich noch relativ günstiger Motor wäre ein Doppelspulenmotor mit Kondensator mit Umschalter. Dieser ist jedoch aufgrund der zwei Wicklungen und der weiteren Bauteile zwangsläufig komplexer und damit meist kostenträchtiger als ein 1-Phasen-Synchronmotor, außerdem muss beim Umschalten zur Vermeidung von Lichtbögen eventuell eine Verzögerung eingehalten werden. Kondensatormotoren sind hinsichtlich der Auslegung des Kondensators allgemein nur auf einen einzigen Belastungsfall von Drehzahl und Drehmoment optimiert, daher sind diese Motoren nicht flexibe

Das Dokument US 2012/032629 A1 offenbart ein mechatronisches System, umfassend:einen einsträngigen 1-Phasen-Synchronmotor, wobei der Motor einen Rotor mit unterschiedlicher Vorzugsausrichtung im bestromten und im unbestromten Zustand aufweist;einen Frequenzumrichter zum Anschluss an eine Netzwechselspannung mit vorgegebener Frequenz, mit einem Gleichrichter, einem Gleichspannungszwischenkreis mit Kondensator, und einem Wechselrichter; und eine Steuereinrichtung, die dazu eingerichtet ist, den Frequenzumrichter anzusteuern, um:den Rotor durch Gleichstrom, überlagerten Gleichstrom oder einen oder mehrere Gleichspannungspulse auszurichten;den Motor durch Anlegen einer durch Modulation aus der gleichgerichteten Netzwechselspannung erzeugten Wechselspannung anlaufen zu lassen, die eine andere Frequenz und eine andere Amplitude als die Netzwechselspannung aufweist; und den Motor durch Erhöhen der Frequenz und optional der Amplitude der angelegten Wechselspannung auf eine Betriebsdrehzahl hochlaufen zu lassen;den Frequenzumrichter anzusteuern, um die angelegte Wechselspannung in mindestens einer Periode durch Veränderung des Tastgrades so vorzugeben, dass sich eine Spannungs-Zeit-Fläche ergibt, um den Motor in einer gewünschten Drehrichtung anlaufen zu lassen.

Es ist daher die Aufgabe der Erfindung, ein verbessertes mechatronisches System mit einem einsträngigen 1-Phasen-Synchronmotor bereit zu stellen, um insbesondere Haushaltsgeräte mit 1-Phasen-Synchronmotoren betreiben zu können.

Es wird ein Verfahren offenbart, welches nicht Teil der Erfindung ist. Das Verfahren ist zum Betrieb eines einsträngigen 1-Phasen-Synchronmotors an einer Netzwechselspannung mit vorgegebener Frequenz und umfasst:
Ausrichten des Rotors durch überlagerte Gleichsspannung;
Anlaufen des Motors durch Anlegen einer Wechselspannung, die eine andere Frequenz (f_{A} > 0 Hz) als die Netzwechselspannung und optional eine andere Amplitude als die Netzwechselspannung; aufweist und
Hochlaufen des Motors auf eine Betriebsfrequenz durch Erhöhen der Frequenz und optional zusätzlich Erhöhen der Amplitude der angelegten Wechselspannung;
wobei die angelegte Spannung mit einem Frequenzumrichter durch Modulation aus der gleichgerichteten Netzwechselspannung (UDC, UDC/2, OV) erzeugt wird.

Die an den Motor angelegte Betriebsspannung, die PWM-modulierte Ausgangsspannung des Frequenzumrichters (Grundwelle), kann dadurch mit einer niedrigeren Frequenz als die Netzfrequenz gewählt werden, um ein In-Tritt-Fallen des Motors zu erleichtern. Es hängt mitunter von der Massenträgheit des Rotors ab, ob bei einer gegebenen Netzfrequenz die Periodenlänge lang genug ist, um das Anlaufen zu gewährleisten. Je größer die Trägheit ist, desto länger muss prinzipiell die Periodenlänge dafür sein. Eine bekannte Lösung für Motoren mit großer Trägheit, beispielsweise große Lüfter, wäre die Verwendung eines Freilaufs, um den Anlauf dennoch zu gewährleisten. Ein Freilauf bedeutet aber mehr Bauteile, somit höhere Kosten, und kann auch akustisch auffällig sein und höheren Bauteileverschleiß verursachen.

Der Motor kann somit mit verbesserter Zuverlässigkeit anlaufen. Damit können insbesondere auch Motoren gestartet werden, die aufgrund ihrer Trägheit mit der Netzfrequenz nicht oder nicht zuverlässig gestartet werden können. Durch das gezielte und vorzugsweise stetige Erhöhen der Frequenz bis auf die Betriebsfrequenz kann weiter ein Sanftanlauf erzielt werden.

Die Betriebsfrequenz ist von der vorgegebenen Frequenz der Netzwechselspannung verschieden und/oder ist die Betriebsspannungsamplitude von der vorgegebenen Amplitude der Netzwechselspannung verschieden.

Die Betriebsfrequenz kann unabhängig von der Netzfrequenz gewählt werden, d.h. sie kann gleich der Netzfrequenz sein, sie kann aber auch niedriger oder höher als diese sein. Damit ist es zum Beispiel möglich, eine vorgegebene konstante Drehzahl für den Motor vorzusehen, egal an welchem landestypischen Stromnetz er betrieben wird. Die Betriebsfrequenz muss ferner nicht konstant sein, sondern sie kann variabel gewählt und insbesondere auch während des Betriebs des Motors variiert werden. Damit ist dann die Drehzahl des Synchronmotors entsprechend wähl- und steuerbar. Drehzahlen im Bereich von 0,1 Hz bis zu mehreren hundert Hertz, in Ausnahmefällen auch Kilohertz, sind denkbar.

In gleicher Weise kann alternativ oder zusätzlich die Betriebsspannungsamplitude unabhängig von der der Netzwechselspannung gewählt werden, auch während des Betriebs. Dies erlaubt es, die effektive Betriebsspannung unabhängig von der Netzspannung vorzugeben, beispielsweise um das gleiche Grundgerät in verschiedenen landesspezifischen Stromnetzen mit unterschiedlichen Spannungen zu betreiben.

Der Motor kann so einerseits optimiert auf eine bestimmte Frequenz und/oder Spannung ausgelegt werden, andererseits aber dennoch universell in verschiedenen Ländervarianten des damit ausgerüsteten Geräts eingesetzt werden.

Die angelegte Wechselspannung wird in mindestens einer Periode durch Veränderung des Tastgrades so vorgegeben, dass sich eine Spannungs-Zeit-Fläche ergibt, um den Motor in einer gewünschten Drehrichtung anlaufen zu lassen.

Es kann also eine angepasste Betriebsfrequenz und/oder Betriebsspannung gewählt werden. In erster Linie geht es zum Anlaufzeitpunkt darum, die Stromamplitude und die Dauer (Frequenz) der ersten halben elektrischen Periode der Betriebsspannung exakt auf die Eigenschaften des Motors (Trägheitsmoment) abzustimmen. Hierzu wird die Spannungs-Zeit-Fläche der ersten halben elektrischen Periode und/oder weiterer elektrischer halber oder voller Perioden vom Frequenzumrichter genau definiert eingestellt.

Dies kann beispielsweise mittels Pulsweiten-Modulation erfolgen, etwa so, dass ein Phasenanschnitt nachgebildet wird. Der Tastgrad der Pulsweitenmodulation der Betriebsspannung entspricht hierbei in der ersten elektrischen Periode in etwa dem zeitlichen Verlauf einer "klassisch" angeschnittenen Sinus-förmigen Spannung, um den Motor in einer gewünschten Drehrichtung anlaufen zu lassen.

Durch das Einschalten der Betriebsspannung mit einem "künstlichen Phasenanschnitt", oder anders gesagt mit einem entsprechenden Spannungssprung bei einem definierten elektrischen Phasenwinkel der Betriebsspannung, oder einem definierten Spannungsblock von entsprechender Amplitude und Dauer, kann der Motor in der gewünschten Rotationsrichtung gestartet werden. Der zu einer jeweiligen Rotationsrichtung passende Phasenwinkel oder Spannungsblock kann für einen gegebenen Motor beispielsweise empirisch ermittelt werden, indem eine Vielzahl von Anläufen über den gesamten Phasenwinkelbereich oder variierenden Spannungsblöcken erfolgt und die jeweils resultierende Rotationsrichtung ermittelt wird. Aus der sich ergebenden Verteilung kann ein Phasenwinkel für jede Rotationsrichtung bestimmt werden, bei dem der Motor sicher in dieser Rotationsrichtung (Uhrzeigersinn oder Gegenuhrzeigersinn) anläuft. Ein Prozentwert von beispielsweise über 99% kann hierbei als sicher im Sinne der Erfindung gelten (Anlauf in die gewünschte Drehrichtung).

Das Verfahren, welches nicht Teil der Erfindung ist, umfasst weiter:
Unterbrechen der angelegten Wechselspannung für ein Zeitintervall;
Messen der elektromotorischen Kraft (EMK) in dem Zeitintervall; und
Erfassen einer Drehung des Rotors, basierend auf der gemessenen elektromotorischen Kraft.

Im stromlosen Zustand der Statorwicklung wird die auf dem trägheitsbedingten Nachlaufen des Rotors beruhende induzierten Spannung gemessen. Es kann auch die Steigung der induzierten Spannung (EMK) ausgewertet werden.

Wenn die Leistungsschalter sperren und der Motorstrom abgeklungen ist (also gleich Null ist), der permanentmagnetische Rotor dabei aber aufgrund seiner Massenträgheit nicht unmittelbar nennenswert verzögert, z.B. innerhalb einer elektrischen Periode seine Drehzahl kaum oder nicht nennenswert verändert, oder gar "sofort stehen bleibt", sondern weiterdreht, wird in die Statorwicklung eine Spannung, entsprechend der EMK und auch entsprechend der Drehzahl, induziert. Diese kann beispielsweise vom mechatronischen System (der Steuerung) mittels eines Spannungsteilers, bestehend beispielsweise aus zwei oder mehreren in Reihe geschalteten elektrischen Widerständen, erfasst, bzw. gemessen werden.

Blockiert beispielsweise der Motor, dann ist im stromlosen Zustand der Statorwicklung keine induzierte Spannung messbar, weil keine zeitliche Änderung der Amplitude des mit der Spule verketteten magnetischen Flusses stattfindet (Induktionsgesetz), weil der Rotor nicht dreht. Dieser Zustand stellt sich zudem beim Kippen (Stall; Außer-Tritt-Fallen) des Synchronmotors ein, hervorgerufen beispielsweise durch hohe Last (hohes Wellenabtriebsmoment) oder dynamische Drehmomentenschwankungen (z.B. eine der Drehbewegung des Rotors überlagerte Pendelbewegung).

Durch die Erfassung der induzierten Spannung (EMK) ist es auch möglich, weitere Betriebszustände auszuwerten.

Gemäß einer Ausführungsform wird im Schritt des Erfassens auch die Drehrichtung erfasst.

Da der Stator eine magnetische Asymmetrie aufweist, um den Anlauf zu gewährleisten, gibt es zwei unterschiedlich große Drehfelder. Dieser Unterschied spiegelt sich ebenfalls im zeitlichen bzw. räumlichen Verlauf der EMK wieder und ist somit ein Indikator für die Drehrichtung des Motors. Die Wahl des Messzeitpunktes und konstruktive Maßnahmen am Motor unterstützen dieses Verfahren dabei.

Das Verfahren, welches nicht Teil der Erfindung ist, umfasst weiter: Bestimmen des Lastzustands des Motors aus dem Leistungsfaktor cos ϕ oder der Zwischenkreisleistung.

Der Wirkleistungsfaktor cos ϕ lässt sich aus der relativen Phasenverschiebung der am Wicklungsstrang des Motors angelegten Klemmenspannung und dem elektrischen Motorstrom, oder alternativ aus der relativen Phasenverschiebung des Phasenstroms des Motors und der gemessenen elektromotorischen Kraft, oder alternativ nur mittels Messung der EMK ermitteln, und dient als Maß für den Lastzustand des Motors.

Weiterhin kann die Leistung aus der elektrischen Stromstärke in der Motorwicklung oder alternativ dem Gleichspannungszwischenkreis vom mechatronischen System (der Steuerung) mittels eines Strom-Mess-Widerstandes (z.B. "Shunt") erfasst bzw. gemessen werden, um die Leistung und damit den Lastzustand des Motors zu ermitteln.

Gemäß einer Ausführungsform treibt der Motor eine Fluidfördervorrichtung an.

Das Verfahren, welches nicht Teil der Erfindung ist, umfasst weiter:
Bestimmen des hydraulischen Lastzustands der Fluidfördervorrichtung aus der Motordrehzahl und/oder dem Lastzustand des Motors, dem Wirkleistungsfaktor cos ϕ, der Zwischenkreisleitung, oder der Änderung dieser Größen über der Zeit.

Damit wird es beispielsweise möglich, eine "Unterlast" zu erfassen, d.h. wenn eine Pumpe, die normalerweise eine Flüssigkeit fördern soll, ganz oder teilweise trocken läuft. Damit wird es beispielsweise möglich, ein sogenanntes "Schlürfen" zu erfassen, d.h. wenn eine Pumpe, die normalerweise ausschließlich Wasser fördern soll, zumindest teilweise Luft fördert. Wird dies erkannt, können geeignete Gegenmaßnahmen ergriffen werden.

Die Fluidfördervorrichtung kann beispielsweise eine Pumpe, d.h. für die Förderung flüssiger Fluide, oder ein Lüfter, d.h. für die Förderung gasförmiger Fluide sein.

Gemäß der Erfindung wird ein mechatronisches System bereitgestellt, umfassend:
einen einsträngigen 1-Phasen-Synchronmotor, wobei der Motor einen Rotor mit unterschiedlicher Vorzugsausrichtung im bestromten und im unbestromten Zustand aufweist;einen Frequenzumrichter zum Anschluss an eine Netzwechselspannung mit vorgegebener Frequenz, mit einem Gleichrichter, einem Gleichspannungszwischenkreis mit Kondensator,und einem Wechselrichter;einen Spannungsmesser; und eine Steuereinrichtung, die dazu eingerichtet ist, den Frequenzumrichter anzusteuern, um:den Rotor durch Gleichstrom, überlagerten Gleichstrom oder einen oder mehrere Gleichspannungspulse auszurichten;den Motor durch Anlegen einer durch Modulation aus der gleichgerichteten Netzwechselspannung erzeugten Wechselspannung anlaufen zu lassen, die eine andere Frequenz und optional eine andere Amplitude als die Netzwechselspannung aufweist; und den Motor durch Erhöhen der Frequenz und optional der Amplitude der angelegten Wechselspannung auf eine Betriebsdrehzahl hochlaufen zu lassen;den Frequenzumrichter anzusteuern, um die angelegte Wechselspannung in mindestens einer Periode durch Veränderung des Tastgrades so vorzugeben, dass sich eine Spannungs-Zeit-Fläche ergibt, um den Motor in einer gewünschten Drehrichtung anlaufen zu lassen;die angelegte Wechselspannung für ein Zeitintervall zu unterbrechende elektromotorische Kraft in dem Zeitintervall mit dem Spannungsmesser zu messen; und eine Drehung des Rotors basierend auf der gemessenen elektromotorischen Kraft zu erfassen.

Gemäß einer Ausführungsform ist die Betriebsfrequenz von der vorgegebenen Frequenz der Netzwechselspannung verschieden und/oder ist die Betriebsspannungsamplitude von der vorgegebenen Amplitude der Netzwechselspannung verschieden.

Die Wechselspannung kann so moduliert werden, dass der Motor in einer gewünschten Drehrichtung anläuft. Dies dadurch erreicht, dass der Tastgrad der Pulsweitenmodulation der Betriebsspannung in der ersten elektrischen Periode, oder auch eventuell weiterer, darauffolgender elektrischer Perioden, in etwa dem zeitlichen Verlauf einer "klassisch" angeschnittenen Sinus-förmigen Spannung entspricht.

Grundsätzlich wird vom Frequenzumrichter die Betriebsspannung in der ersten halben elektrischen Periode und/oder weiterer elektrischer halber oder voller Perioden durch Veränderung des Tastgrades der Pulsweitenmodulation über der Zeit genau so eingestellt, dass sich eine solche Spannungs-Zeit-Fläche ergibt, dass der durch den Wicklungsstrang des Motors fließende elektrische Strom in seiner Amplitude und Frequenz exakt auf die Eigenschaften des Motors (z.B. Massenträgheitsmoment oder Flussverkettung) abgestimmt ist, um einen sicheren Anlauf in gewünschter Drehrichtung zu realisieren.

Durch das Vorsehen zweier unterschiedlicher Ruhelagen im bestromten und unbestromten Zustand des Stators kann der Motor für das Ansteuerverfahren optimiert werden. Dies kann allgemein durch eine Asymmetrie im Stator oder Rotor erfolgen, beispielsweise durch eine spezielle Geometrie des Stators oder des Rotors.

Der Rotor kann nach jedem Auslauf in einer definierten Position geparkt werden (Parkposition). Dies kann durch einen Dauermagneten oder auch durch entsprechende Bestromung erzielt werden.

Das mechatronische System umfasst einen Spannungsmesser, wobei die Steuereinrichtung weiter eingerichtet ist:
die angelegte Wechselspannung für ein Zeitintervall zu unterbrechen;
die elektromotorische Kraft in dem Zeitintervall mit dem Spannungsmesser zu messen; und
eine Drehung des Rotors basierend auf der gemessenen elektromotorischen Kraft zu erfassen.

Der Spannungsmesser kann beispielsweise einen Spannungsteiler umfassen, bestehend aus zwei oder mehr in Reihe geschalteten elektrischen Widerständen.

Das mechatronische System kann einen Stromsensor umfassen, welcher die elektrische Stromstärke in der Motorwicklung oder alternativ dem Gleichspannungszwischenkreis erfasst. Der Strom-Sensor kann beispielsweise ein Shunt sein.

Gemäß einer Ausführungsform ist die Steuereinrichtung weiter eingerichtet, den Lastzustand des Motors aus dem Wirkleistungsfaktor cos ϕ oder der Zwischenkreisleistung zu bestimmen.

Der Wirkleistungsfaktor cos ϕ kann hierbei auf zweierlei Arten ermittelt werden:
Aus der relativen Phasenverschiebung der am Wicklungsstrang des Motors angelegten Klemmenspannung und dem elektrischen Motorstrom, oder aus der relativen Phasenverschiebung des Phasenstroms des Motors und der gemessenen elektromotorischen Kraft. Zur Ermittlung der Phasenverschiebung eignet sich die Detektion der zeitlichen Verzögerung zwischen den Nulldurchgängen des Phasenstroms und der EMK. Der absolute Wert der Phasenverschiebung ergibt sich aus der Division der zeitlichen Verzögerung über die elektrische Periode der Spannung.

Alternativ kann der Wirkleistungsfaktor au der Messung der Zwischenkreisleistung bestimmt werden. Hierbei werden sowohl der Zwischenkreisstrom als auch die elektrische Zwischenkreisspannung erfasst. Das Produkt aus dem Zwischenkreisstrom und der Zwischenkreisspannung entspricht der elektrischen Wirkleistung des Motors zuzüglich der Verluste der Halbleiter. Die abgegebene mechanische Leistung kann somit unmittelbar durch Subtraktion der in der Regel bekannten Halbleiterverluste und anschließender Multiplikation mit dem Wirkungsgrad des Motors ermittelt werden, wobei der Wirkungsgrad in der Regel über den Nennbereich als konstant angenommen werden kann.

Gemäß einer Ausführungsform ist der Motor Teil einer Fluidfördervorrichtung;
wobei die Steuereinrichtung dazu eingerichtet ist, den hydraulischen Lastzustand der Fluidfördervorrichtung aus der Motordrehzahl und dem Motorstrom, dem Wirkleistungsfaktor cos ϕ, der Zwischenkreisleitung, oder der Änderung dieser Größen über der Zeit, zu bestimmen und aus dem hydraulischen Lastzustand unter Verwendung einer Nachschlagetabelle oder auch ermittelter polynominaler Funktionen den Volumenstrom des geförderten Fluids abzuleiten.

Gemäß einer Ausführungsform ist der Motor ein Permanentmagnetmotor.

### Kurze Beschreibung der Figuren

- Fig. 1: zeigt schematisch einen 1-Phasen-Synchronmotor;
- Fig. 2: zeigt einen Spannungs-Zeitverlauf des Ausricht-Schritts;
- Fig. 3: zeigt einen Spannungs-Zeitverlauf des Anlauf-Schritts in einer ersten Drehrichtung;
- Fig. 4: zeigt einen Spannungs-Zeitverlauf des Anlauf-Schritts in einer zweiten Drehrichtung;
- Fig. 5: zeigt einen Spannungs-Zeitverlauf einer Ansteuerung; und
- Fig. 6: zeigt einen Frequenz-Zeitverlauf;
- Fig. 7: zeigt eine Ansteuerung mit zwei Halbbrücken und zwei Potenzialen gemäß einer ersten Ausführungsform;
- Fig. 8: zeigt eine Ansteuerung mit einer Halbbrücke und drei Potenzialen gemäß einer zweiten Ausführungsform;

### Detaillierte Beschreibung

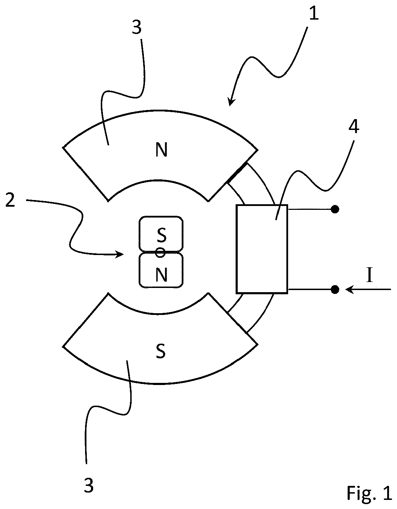

In Figur 1 ist schematisch ein 1-Phasen-Synchronmotor 1 gezeigt. Der Rotor 2 ist hier als Permanentmagnet mit einem "Nord-" und einem "Süd-Pol" N bzw. S gezeigt. Der Stator 3 ist mit einem oberen und einem unteren Hauptpol gezeigt, in Verbindung damit befindet sich eine seitliche Spule bzw. Wicklung 4. Wird diese Wicklung 4 mit Strom I beaufschlagt, so ergibt sich je nach Stromrichtung an den Hauptpolen ein magnetischer "Nord-" bzw. ein "Süd-Pol". Je nach relativer Stellung von Rotor 2 und Stator 3 ergibt sich dadurch eine Abstoßung/Anziehung, die den Rotor 2 zur Drehbewegung anregt.

Wird die Stromrichtung und somit die Magnetfeldrichtung nun regelmäßig umgekehrt, ergibt sich die gewünschte Rotation des Motors. Der Rotor wird dem Wechselfeld idealerweise synchron folgen. Da ohne einen zusätzlichen Sensor jedoch unbekannt ist, in welcher Stellung sich der Rotor initial, d.h. im Stillstand, befindet, wird der Rotor bei einem solchen einfachen 1-Phasen-Synchronmotor rein statistisch in einer der zwei möglichen Richtungen anlaufen (Uhrzeigersinn/Gegenuhrzeigersinn).

Für Anwendungen, bei denen die Drehrichtung keine Rolle spielt, können solche einfachen Motoren am starren Netz ohne Weiteres eingesetzt werden. Beispiele sind der Antrieb eines Drehtellers eines Mikrowellengeräts oder eine in beiden Drehrichtungen gleich arbeitende Fluidpumpe. Richtungsabhängige Antriebssituationen, wie Türantriebe oder strömungsoptimierte asymmetrisch aufgebaute Pumpen, sind damit jedoch nicht sinnvoll möglich, da hierfür die Drehrichtung nicht beliebig sein kann. Da bei Betrieb des Synchronmotors am starren Netz mit Wechselstrom die Drehzahl weiterhin über die Polpaarzahl mit der Netzfrequenz gekoppelt ist, sind variable Drehzahlen im Betrieb nicht möglich.

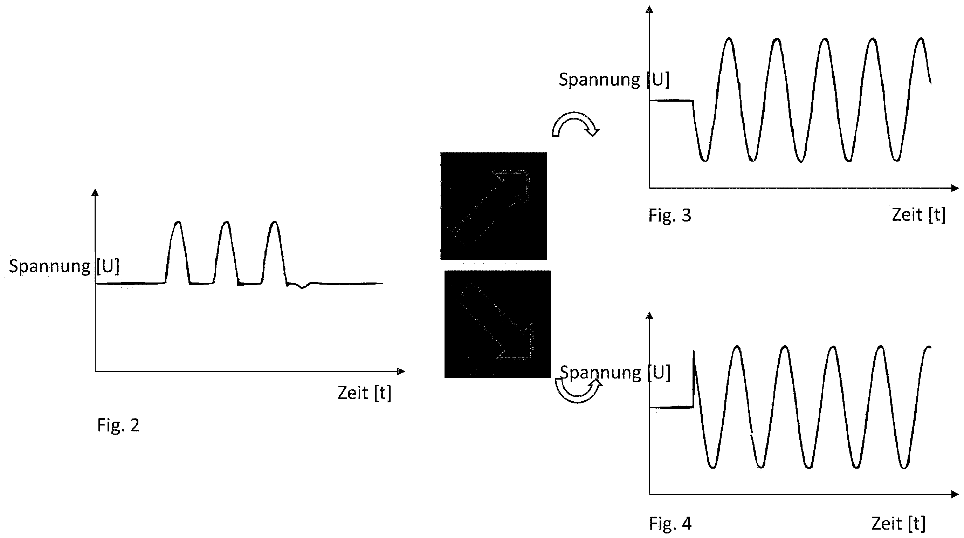

Figur 2 zeigt ein Diagramm einer möglichen Verlauf der Spannung U über die Zeit t für den Ausrichtschritt einer Ausführungsform. In der gezeigten Ausführung sind drei Gleichspannungspulse gleicher Polarität gezeigt, alternativ sind mehr oder weniger Pulse möglich, ebenso ist eine Ausrichtung mittels Gleichstrom oder überlagertem Gleichstrom möglich. Genauso ist die Höhe der Pulse hier als gleich gezeigt, denkbar sind aber auch unterschiedliche Spannungshöhen, beispielsweise eine stufenweise Erhöhung der Spannungsamplitude. Denkbar sind auch Pulse mit anderer Polarität als in der gezeigten Ausführungsform. Durch diesen Schritt wird der Rotor zum Stator ausgerichtet. Es sind weitere Ausführungsformen mit anderen Ausricht-Ansteuerungen denkbar.

In Figur 3 und 4 sind jeweils unterschiedliche Anlauf-Ansteuerungen gezeigt, die sich an den Schritt des Ausrichtens anschließen. In diesem Beispiel für den Anlauf im Uhrzeigersinn in Figur 3 und für den Gegenuhrzeigersinn in Figur 4. Es ist erkennbar, dass die Wechselspannung bei unterschiedlichen elektrischen Phasenwinkeln eingeschaltet wird. Dadurch sind zu Beginn der Ansteuerung die Stromrichtung und -amplitude und somit Magnetfeldrichtung und -amplitude unterschiedlich, um den Anlauf in der jeweils gewünschten Richtung zu erzeugen. Es sind weitere Ausführungsformen mit anderen Anlauf-Ansteuerungen denkbar.

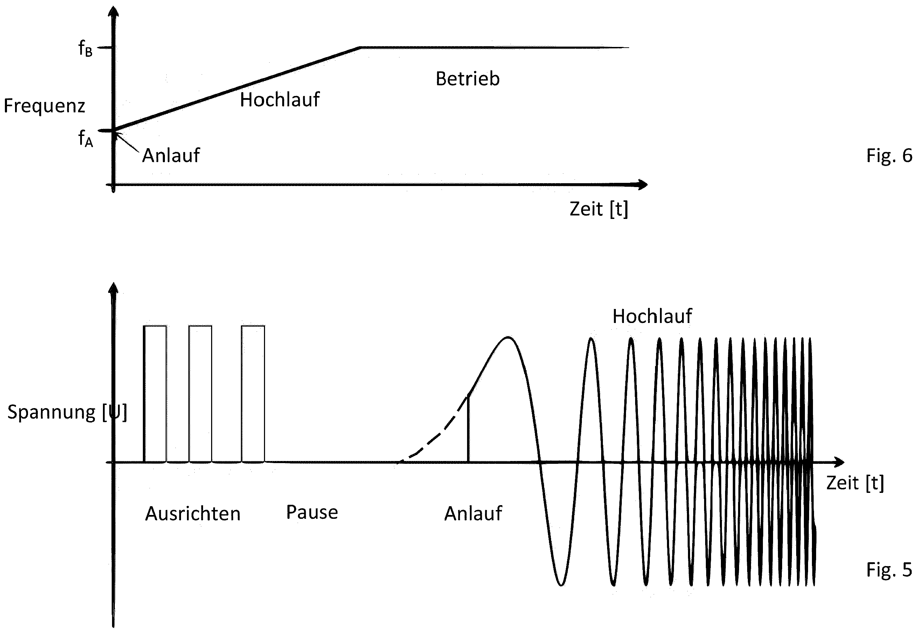

Figur 5 zeigt ein Diagramm des zeitlichen Verlaufs der Ausgangsspannung des Frequenzumrichters (Tastgrad oder der sich daraus ergebenen Betriebswechselspannung) über die Zeit für einen Ansteuerungsablauf.

Im Schritt des Ausrichtens wird der Rotor mit hier drei Gleichspannungspulsen ausgerichtet. Danach schließt sich eine Pause an.

Der Schritt des Anlaufens besteht darin, eine Wechselspannung anzulegen, beginnend mit einem Spannungssprung (ähnlich eines definierten Phasenanschnittes mit festgelegtem elektrischem Phasenwinkel) mit festgelegter Spannungs-Zeit-Fläche in der ersten und/oder weiterer elektrischer halber oder ganzer Perioden, zum Anlauf des Motors in die gewünschte Drehrichtung.

Dem Anlauf schließt sich ein Schritt des Hochlaufens an, in dem die Frequenz der angelegten Wechselspannung bis auf die gewünschte Betriebsfrequenz und somit Drehzahl des Motors erhöht wird. Auch die Erhöhung der Amplitude der elektrischen Spannung, zum Beispiel in proportionalem Verhältnis zur Erhöhung der Frequenz, bis auf gewünschte Betriebsspannung, ist als Ausführungsform denkbar (U/f-Rampe).

Figur 6 zeigt beispielhaft ein Diagramm der Frequenz über die Zeit, für die Schritte Anlauf, Hochlauf und Betrieb. Hier ist zu erkennen, dass der Anlauf bei einer niedrigeren Frequenz f_{A} erfolgt als der Betrieb. In der Hochlaufphase erfolgt hier ein kontinuierliches Erhöhen der Frequenz von der Anlauffrequenz f_{A} zur Betriebsfrequenz f_{B}.

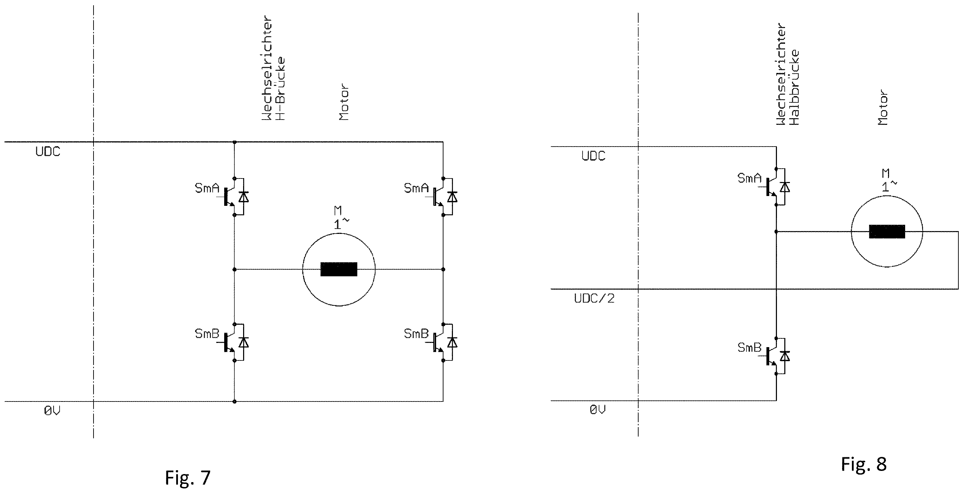

In Figur 7 ist eine Ausführungsform einer Ansteuerschaltung gezeigt. In dieser Variante wird eine sogenannte "H-Brückenschaltung" mit vier Leistungshalbleitern verwendet. Diese wird von einer Gleichspannung eines Gleichrichters (nicht gezeigt) mit den Potenzialen UDC und 0V versorgt.

In Figur 8 ist eine andere Ausführungsform einer Ansteuerschaltung gezeigt. In dieser Variante wird eine Halbbrücke mit nur zwei Leistungshalbleitern verwendet. Ein Ende der Motorwicklung ist an einem Zwischenpotenzial, beispielsweise UDC/2, angeschlossen, das andere Ende der Wicklung wird über einen jeweiligen Leistungshalbleiter mit dem Potenzial UDC bzw. 0V verbunden.

## Patentansprüche

1. Mechatronisches System, umfassend:
einen einsträngigen 1-Phasen-Synchronmotor, wobei der Motor einen Rotor mit unterschiedlicher Vorzugsausrichtung im bestromten und im unbestromten Zustand aufweist;
einen Frequenzumrichter zum Anschluss an eine Netzwechselspannung mit vorgegebener Frequenz, mit einem Gleichrichter, einem Gleichspannungszwischenkreis mit Kondensator, und einem Wechselrichter;
einen Spannungsmesser; und
eine Steuereinrichtung, die dazu eingerichtet ist, den Frequenzumrichter anzusteuern, um:
den Rotor durch Gleichstrom, überlagerten Gleichstrom oder einen oder mehrere Gleichspannungspulse auszurichten;
den Motor durch Anlegen einer durch Modulation aus der gleichgerichteten Netzwechselspannung erzeugten Wechselspannung anlaufen zu lassen, die eine andere Frequenz und optional eine andere Amplitude als die Netzwechselspannung aufweist; und
den Motor durch Erhöhen der Frequenz und optional der Amplitude der angelegten Wechselspannung auf eine Betriebsdrehzahl hochlaufen zu lassen;
den Frequenzumrichter anzusteuern, um die angelegte Wechselspannung in mindestens einer Periode durch Veränderung des Tastgrades so vorzugeben, dass sich eine Spannungs-Zeit-Fläche ergibt, um den Motor in einer gewünschten Drehrichtung anlaufen zu lassen;
die angelegte Wechselspannung für ein Zeitintervall zu unterbrechen;
die elektromotorische Kraft in dem Zeitintervall mit dem Spannungsmesser zu messen; und
eine Drehung des Rotors basierend auf der gemessenen elektromotorischen Kraft zu erfassen.

2. Mechatronisches System nach Anspruch 1, wobei die Betriebsfrequenz von der vorgegebenen Frequenz der Netzwechselspannung verschieden ist und/oder die Betriebsspannungsamplitude von der vorgegebenen Amplitude der Netzwechselspannung verschieden ist.

3. Mechatronisches System nach Anspruch 1 oder 2, wobei die Steuereinrichtung weiter eingerichtet ist, die Drehrichtung basierend auf der gemessenen elektromotorischen Kraft zu erfassen.

4. Mechatronisches System nach einem der Ansprüche 1 bis 3, wobei die Steuereinrichtung weiter eingerichtet ist, den Lastzustand des Motors aus dem Wirkleistungsfaktor cos ϕ oder der Zwischenkreisleistung zu bestimmen.

5. Mechatronisches System nach einem der Ansprüche 1 bis 4, wobei der Motor Teil einer Fluidfördervorrichtung ist;
wobei die Steuereinrichtung dazu eingerichtet ist, den hydraulischen Lastzustand der Fluidfördervorrichtung aus der Motordrehzahl und dem Motorstrom, dem Wirkleistungsfaktor cos ϕ, der Zwischenkreisleitung, oder der Änderung dieser Größen über der Zeit, zu bestimmen und aus dem hydraulischen Lastzustand unter Verwendung einer Nachschlagetabelle oder auch ermittelter polynominaler Funktionen den Volumenstrom des geförderten Fluids abzuleiten.

6. Mechatronisches System nach einem der Ansprüche 1 bis 5, wobei der Motor ein Permanentmagnetmotor ist.

## Claims

1. Mechatronic system, comprising:
a single-strand 1-phase synchronous motor, wherein the motor has a rotor with different preferred orientations in the energised and de-energised states;
a frequency converter for connecting to an alternating line voltage at a predetermined frequency, having a rectifier, a direct voltage intermediate circuit comprising a capacitor, and an inverter;
a voltmeter; and
a control device that is set up to control the frequency converter in order to:
align the rotor using direct current, superimposed direct current or one or more direct voltage pulses;
start the motor by applying an alternating voltage generated by modulation from the rectified alternating line voltage, which alternating voltage has a different frequency and optionally a different amplitude than the alternating line voltage; and
let the motor run up to an operating speed by increasing the frequency and optionally the amplitude of the applied alternating voltage;
control the frequency converter in order to specify the applied alternating voltage in at least one period by changing the duty cycle so that a voltage-time integral results in order to start the motor in a desired direction of rotation;
interrupt the applied alternating voltage for a time interval;
measure the electromotive force in the time interval with the voltmeter; and
detect a rotation of the rotor based on the measured electromotive force.

2. Mechatronic system according to claim 1, wherein the operating frequency is different from the predetermined frequency of the alternating line voltage and/or the operating voltage amplitude is different from the predetermined amplitude of the alternating line voltage.

3. Mechatronic system according to either claim 1 or claim 2, wherein the control device is further configured to detect the direction of rotation based on the measured electromotive force.

4. Mechatronic system according to any of claims 1 to 3, wherein the control device is further set up to determine the load status of the motor from the power factor cos ϕ or the intermediate circuit power.

5. Mechatronic system according to any of claims 1 to 4, wherein the motor is part of a fluid delivery device;
wherein the control device is set up to determine the hydraulic load status of the fluid delivery device from the motor speed and the motor current, the power factor cos ϕ, the intermediate circuit line, or the change in these variables over time, and to derive the volume flow of the delivered fluid from the hydraulic load status using a lookup table or determined polynomial functions.

6. Mechatronic system according to any of claims 1 to 5, wherein the motor is a permanent magnet motor.

## Revendications

1. Système mécatronique, comprenant :
un moteur synchrone monophasé monobrin, le moteur présentant un rotor comportant une orientation préférée différente à l'état alimenté et à l'état non alimenté ;
un convertisseur de fréquence permettant la connexion à une tension alternative de réseau avec une fréquence prédéfinie, comportant un redresseur, un circuit intermédiaire de tension continue avec condensateur et un onduleur ;
un voltmètre ; et
un dispositif de commande qui est configuré pour commander le convertisseur de fréquence afin :
d'aligner le rotor par courant continu, courant continu superposé ou une ou plusieurs impulsions de tension continue ;
de démarrer le moteur en appliquant une tension alternative générée par modulation à partir de la tension alternative de réseau redressée, laquelle tension alternative présente une fréquence autre et éventuellement une amplitude autre que celles de la tension alternative de réseau ; et
de laisser tourner le moteur jusqu'à une vitesse de fonctionnement en augmentant la fréquence et éventuellement l'amplitude de la tension alternative appliquée ;
de commander le convertisseur de fréquence afin de prédéfinir la tension alternative appliquée dans au moins une période en changeant le rapport cyclique de telle sorte qu'une zone tension-temps en résulte, afin de démarrer le moteur dans un sens de rotation souhaité ;
d'interrompre la tension alternative appliquée pendant un intervalle de temps ;
de mesurer la force électromotrice avec le voltmètre dans l'intervalle de temps ; et
de détecter une rotation du rotor sur la base de la force électromotrice mesurée.

2. Système mécatronique selon la revendication 1, dans lequel la fréquence de fonctionnement est différente de la fréquence prédéfinie de la tension alternative de réseau et/ou l'amplitude de tension de fonctionnement est différente de l'amplitude prédéfinie de la tension alternative de réseau.

3. Système mécatronique selon la revendication 1 ou 2, dans lequel le dispositif de commande est en outre configuré pour détecter le sens de rotation sur la base de la force électromotrice mesurée.

4. Système mécatronique selon l'une des revendications 1 à 3, dans lequel le dispositif de commande est en outre configuré pour déterminer l'état de charge du moteur à partir du facteur de puissance active cos ϕ ou de la puissance de circuit intermédiaire.

5. Système mécatronique selon l'une des revendications 1 à 4, dans lequel le moteur fait partie d'un appareil de distribution de fluide ;
dans lequel le dispositif de commande est configuré pour déterminer l'état de charge hydraulique de l'appareil de distribution de fluide à partir de la vitesse de moteur et du courant de moteur, du facteur de puissance active cos ϕ, de la puissance de circuit intermédiaire, ou du changement desdites variables dans le temps, et pour déduire le débit volumique du fluide distribué à partir de l'état de charge hydraulique à l'aide d'une table de consultation ou de fonctions polynomiales également déterminées.

6. Système mécatronique selon l'une des revendications 1 à 5, dans lequel le moteur est un moteur à aimant permanent.
